# EUROPÄISCHE PATENTSCHRIFT

(11) **EP 3 290 913 B1**
(45) Veröffentlichungstag und Bekanntmachung des Hinweises auf die Patenterteilung: **27.07.2022**
(21) Anmeldenummer: 16186930.0
(22) Anmeldetag: 02.09.2016
(51) Int. Cl.: G01N 23/2258, H01J 49/14

(54) **SEKUNDÄRIONENMASSENSPEKTROKOPISCHES VERFAHREN, SYSTEM UND VERWENDUNGEN HIERVON**
SECONDARY IONS MASS SPECTROSCOPIC METHOD, SYSTEM AND USES THEREOF
PROCEDE SPECTROSCOPIQUE DE MASSE D'IONS SECONDAIRE, SYSTÈME ET SES UTILISATIONS

(43) Veröffentlichungstag der Anmeldung: 07.03.2018
(73) Patentinhaber: ION-TOF Technologies GmbH, 48149 Münster (DE)
(72) Erfinder: KAYSER, Sven, 48157 Münster (DE)
(74) Vertreter: Pfenning, Meinig & Partner mbB

(56) Entgegenhaltungen:
- US-A1- 2013 277 549
- US-A1- 2014 252 225
- US-A1- 2014 332 679
- WANG ZHAOYING ET AL: "Argon Cluster Sputtering Source for ToF-SIMS Depth Profiling of Insulating Materials: High Sputter Rate and Accurate Interfacial Information", JOURNAL OF THE AMERICAN SOCIETY FOR MASS SPECTROMETRY, ELSEVIER SCIENCE INC, US, Bd. 26, Nr. 8, 8. Mai 2015 (2015-05-08), Seiten 1283-1290, XP035508467, ISSN: 1044-0305, DOI: 10.1007/S13361-015-1159-1 [gefunden am 2015-05-08]
- FUJIMOTO HIROSHI ET AL: "Origin of external quantum efficiency degradation in organic light-emitting diodes with a DC magnetron sputtered cathode", JOURNAL OF VACUUM SCIENCE & TECHNOLOGY B: MICROELECTRONICS AND NANOMETER STRUCTURES, AMERICAN INSTITUTE OF PHYSICS, 2 HUNTINGTON QUADRANGLE, MELVILLE, NY 11747, Bd. 32, Nr. 6, 15. Oktober 2014 (2014-10-15), XP012190448, ISSN: 2166-2746, DOI: 10.1116/1.4897920 [gefunden am 1901-01-01]
- NINOMIYA S ET AL: "Secondary ion measurements for oxygen cluster ion SIMS", APPLIED SURFACE SCIENCE, ELSEVIER, AMSTERDAM, NL, Bd. 252, Nr. 19, 30. Juli 2006 (2006-07-30), Seiten 7290-7292, XP024893005, ISSN: 0169-4332, DOI: 10.1016/J.APSUSC.2006.02.138 [gefunden am 2006-07-30]

## Beschreibung

Die vorliegende Erfindung betrifft ein sekundärionenmassenspektrokopisches Verfahren (SIMS) sowie ein System mit einem Massenspektrometer zur Durchführung dieses Verfahrens. Weiterhin betrifft die vorliegende Erfindung eine Verwendung eines derartigen Verfahrens oder eines derartigen Systems zur Untersuchung von Alkalimetallen in einer Probe.

In der Mikroelektronik spielen mobile Ionen wie z.B. Natrium und Kalium eine sehr wichtige Rolle. Befinden sich diese als Verunreinigungen in Bauelementen, so können sie infolge der angelegten Spannungen sehr schnell in den dielektrischen Schichten diffundieren. Solche Verunreinigungen können dann die Eigenschaften eines Bauelementes erheblich beinträchtigen. Daher wird zur Optimierung der Zuverlässigkeit und Lebensdauer eines elektronischen Bauelementes ein empfindliches und quantitatives Nachweisverfahren für Alkalimetalle benötigt. Auch die Eigenschaften von Gläsern werden durch Alkalimetalle stark beeinflusst. Den Alkalimetalle wie z.B. Natrium und Kalium kommt bei der Glaskorrosion eine großer Bedeutung zu.

Die Sekundärionen-Massenspektrometrie (SIMS) ist ein etabliertes Verfahren zur Bestimmung der Tiefenverteilung von Elementen und Verbindungen in dünnen Schichten. Die Oberfläche wird dabei mit Primärionen von einigen keV Energie beschossen und die emittierten Sekundärionen werden mit einem Massenspektrometer analysiert. Durch die Rasterung eines fokussierten Primärionenstrahls lässt sich ein gleichmäßiger Abtrag auf einer zu analysierenden Fläche erreichen. So können die Sekundärionenintensitäten als Funktion der Abtragtiefe ermittelt werden. Die SIMS zeichnet sich durch besonders niedrige Nachweisgrenzen im ppm bis in den ppb Bereich aus. Die so gewonnen Intensitätsprofile (Intensität gegen Messzeit) lassen sich durch geeignete Messungen der Abtragtiefe entsprechend kalibrieren und in Tiefenprofile konvertieren.

Die Sekundärionenausbeute (definiert als Anzahl der emittierten Sekundärionen pro Primärion) für ein chemisches Element hängt sehr stark von der chemischen Umgebung ab. Dies kann genutzt werden, indem man für den Abtrag reaktive Primärionen einsetzt. Durch die Implantation dieser Primärionen wird die Chemie der Oberfläche so verändert, dass eine gesteigerte Sekundärionen-ausbeute erreicht wird. Es ist bekannt, dass durch den Einsatz von Sauerstoffprimärionen (O₂⁺) die Emission positiver Sekundärionen begünstigt wird. Dies wird meist für den empfindlichen Nachweis von elektropositiven Elementen wie Metallen und Alkalimetallen eingesetzt. Die Sekundärionenausbeute von elektronegativen Elementen wird durch die Implantation von Cäsium begünstigt. Beide Arten von Primärionen werden routinemäßig in der SIMS verwendet.

Die Analyse der emittierten Sekundärionen kann mit unterschiedlichen Massenspektrometern erfolgen. Etabliert für die Tiefenprofilierung sind magnetische Sektorfeldgeräte oder Quadrupol-Massenspektrometer. Hier wird in der Regel das Massenspektrometer als Massenfilter betrieben. Die Intensität der verschiedenen Sekundärionenmassen kann durch die entsprechende Veränderung des Massenfilters bestimmt werden. Diese Arten von Massenspektrometern arbeiten mit kontinuierlichen Primärionenstrahlen.

Weiterhin ist in der SIMS auch das Flugzeitmassenspektrometer (ToF = timeof-flight) verbreitet. Bei dieser ToF-SIMS genannten Methode wird die Oberfläche mit einem kurzen lonenpuls beschossen. Die desorbierten Sekundärionen werden beschleunigt und ihre Laufzeit wird auf einer geeigneten Flugstrecke vermessen. Aus dieser Laufzeit lässt sich die Masse der Sekundärionen ermitteln. Bei dieser Spektrometerart können über die Messung der Laufzeit alle Sekundärionenmassen erfasst werden, die durch einen Primärionenpuls erzeugt werden. Es findet also eine parallele Registrierung aller Massen statt. Da jedoch die Abtraggeschwindigkeit durch die Pulsung des Primärionenstrahls um mehrere Größenordnungen reduziert ist, wird für die Tiefenprofilierung überwiegend das Zweistrahlverfahren eingesetzt. Nach dem Beschuss durch den Primärionenpuls wird während der Laufzeitmessung die Probe mit einer zweiten Sputterionenquelle abgetragen. Zur Steigerung der Sekundärionenausbeute werden auch hier typischerweise Sauerstoff- und Cäsiumionenquellen als Sputterionenquelle eingesetzt. Als Analysequelle haben sich die sogenannten Flüssigmetall-Ionenquellen durchgesetzt. Beispiele hierfür sind Gallium-, Gold- und Bismut-Flüssigmetallionenquellen.

Der Beschuss durch elektrisch geladene Primärionen sowie die Emission von geladenen Sekundärteilchen wie Elektronen, positiv oder negative geladenen Sekundärionen führt bei isolierenden Proben zu einer Veränderung des Oberflächenpotentials. Dies kann durch die Einwirkung des elektrisch geladenen Bereichs auf die desorbierten Sekundärionen nicht nur zu einer Veränderung ihrer Energien, sondern auch zu einer Veränderung ihrer Flugbahnen führen. Beides kann erhebliche Transmissionsverlusten im Massenspektrometer zur Folge haben. Weiterhin verursacht dies häufig auch eine deutliche Verschlechterung der Massenauflösung. Durch die Aufladung der Probenoberfläche in Verbindung mit dem Primärionenbeschuss kann es auch zu Veränderungen in der Probe kommen. Es ist bekannt, dass sich einige Elemente unter dem Einfluss der Aufladung in der Probe bewegen können (Elektromigration). Hierzu neigen insbesondere die Alkalimetalle. Als Folge der Aufladung sind die Intensitäts- bzw. Tiefenverteilungen oft sehr stark verfälscht.

Zur Kompensation der Aufladungen werden sehr häufig Elektronenstrahlen eingesetzt. Die Aufladung der Probenoberfläche durch den Primärionenstrahl, im Zweistrahlverfahren auch durch den Sputterionenstrahl, ist in der Regel elektrisch positiv. Die negative Ladung der Elektronen soll dann die positiven Aufladungen genau kompensieren. Dies kann durch entsprechende Kontrolle der Stromdichten der Ionen- und Elektronenstrahlen erfolgen. Durch Einsatz eines Überschusses von sehr niederenergetischen Elektronen mit einer Energie von wenigen eV kann auch eine automatische Stabilisierung des Oberflächenpotentials erreicht werden. Die Oberfläche nimmt nur solange Elektronen an, bis das Oberflächenpotential dem Potential der Elektronenquelle (Potential der emittierenden Kathode der Elektronenquelle) entspricht. Diese Methode wird häufig in der ToF-SIMS verwendet. Hier kann das Extraktionsfeld für die Sekundärionen während der Laufzeitmessung ausgeschaltet werden. So können die niederenergetischen Elektronen den Analyseort erreichen und die Aufladung kompensieren.

Der Einsatz dieser Ladungskompensationsmethoden erlaubt die weitgehend störungsfreie Messung der Sekundärionenintensitäten. Jedoch findet häufig auch bei deutlich reduzierter Aufladung der Probe noch eine Elektromigration statt. Infolge der verbleibenden geringen Aufladung können einige Elemente sich von der Oberfläche entfernen und so für die Desorption durch den Primärionenstrahl nicht mehr zur Verfügung stehen. Dieses Problem ist besonders ausgeprägt bei der Tiefenprofilierung von Alkalimetallen in Isolatoren wie z.B. SiO₂ und Gläsern. Kurz nach dem Beginn des Tiefenprofils bricht die Intensität der Alkaliionen sehr stark ein. Erst bei Erreichen einer leitenden Schicht unterhalb der isolierenden Schicht wird die Elektromigration gestoppt. Dies führt zu extrem überhöhten Konzentrationen und Sekundärionenintensitäten an der Grenzschicht.

Die Tiefenprofilierung von Isolatoren mittel SIMS wird durch Aufladungen der Probenoberfläche erheblich erschwert. Auch unter Einsatz von Elektronen zur Ladungskompensation kommt es zu einer Elektromigration von einigen Elementen wie z.B. Alkalimetallen. Setzt man zur Steigerung der positiven Sekundärionenausbeute O₂⁺ Primärionen ein, so ist diese Elektromigration besonders ausgeprägt und verhindert die Messung der korrekten Tiefenverteilung.

Es hat sich in der Praxis gezeigt, dass die Elektromigration durch den Einsatz von Cäsiumionenquellen deutlich reduziert werden kann. Jedoch ist die positive lonenausbeute deutlich vermindert. Dies hat eine erhebliche Verschlechterung der Nachweisgrenzen zur Folge.

Die Artikel "Argon Cluster Sputtering Source for ToF-SIMS Depth Profiling of Insulating Materials: High Sputter Rate and Accurate Interfacial Information" von Wang Zhaoying et al. in: Journal of the American Society for Mass Spectrometry, Band 26, Nr. 8 vom 8. Mai 2015, auf den Seiten 1283 bis 1290, und "Origin of external quantum efficiency degradation in organic lightemitting diodes with a DC magnetron sputtered cathode" von Fujimoto Hiroshi et al. in: Journal of Vacuum Science and Technology B: Microelectronics and nanometers structures, Band 32, Nr. 6 von 2014 zeigen die Verwendung eines Argon-Cluster-lonen-Sputter-Strahls zur Analyse von Alkalimetallen auf der gesputterten Oberfläche.

Die US 2013/0277549 A1, US 20145/0252225 A1 und US 2014/0332679 A1 offenbaren jeweils unterschiedlich gestaltete ionenstrahlbasierte Massenspektrometer.

NINOMIYA S ET AL: "Secondary ion measurements for oxygen cluster ion SIMS", APPLIED SURFACE SCIENCE, ELSEVIER, AMSTERDAM, NL, Bd. 252, Nr. 19, 30. Juli 2006 (2006-07-30), Seiten 7290-7292, XP024893005, ISSN: 0169-4332, DOI: 10.1016/J.APSUSC.2006.02.138 zeigt die Analyse der Oberfläche eines halbleitenden Si-Substrats mit O₂₋Cluster als Primärionenstrahl. Es wird gezeigt, dass bei Verwendung von O₂-Clustern hoher Energie als Primärionenstrahl SiO_{X}-Ionen als Sekundärionen erzeugt werden. Derartige SiO_{X}-Sekundärionen wurden jedoch nicht erzeugt bei Verwendung von O₂-Ionen mit einer Energie von 5 - 20 keV, Ar-Ionen oder Ar-Clustern als Primärionenstrahl.

Aufgabe der vorliegenden Erfindung ist es daher, ein sekundärionenmassenspektrokopisches Verfahren und ein hierfür geeignetes Massenspektrometer zur Verfügung zu stellen, mit dem eine Tiefenprofilierung von isolierenden Materialien, insbesondere auf darin enthaltene Alkalimetalle mit möglichst geringer oder ohne Verfälschung der Tiefenverteilung bei gleichzeitig niedrigen Nachweisgrenzen möglich ist. Weiterhin ist es Aufgabe der vorliegenden Erfindung, Verwendungen für derartige Verfahren oder Massenspektrometer zur Verfügung zu stellen.

Die Aufgabe wird durch das sekundärionenmassenspektrokopische Verfahren nach Anspruch 1, das System mit einem Massenspektrometer nach Anspruch 6 sowie die Verwendung nach Anspruch 7 gelöst. Vorteilhafte Weiterbildungen des erfindungsgemäßen Verfahrens und des erfindungsgemäßen Massenspektrometers werden in den jeweiligen abhängigen Ansprüchen gegeben.

Das erfindungsgemäße sekundärionenmassenspektrokopische Verfahren zur tiefenprofilierten Untersuchung von Alkalimetallen in einem isolierenden Material, wird als Ein- oder Zweistrahl-SIMS durchgeführt. Dies bedeutet, dass als Sputterionenstrahl zum Abtrag oberflächennaher Schichten und zur Analyse der oberflächennahen Schichten unter Desorption von zu analysierenden Sekundärionen entweder derselbe lonenstrahl oder zwei verschiedene lonenstrahlen verwendet werden können.

Erfindungsgemäß enthält nun zumindest der zum Abtrag der Probenoberfläche (Sputtern) eingesetzte lonenstrahl überwiegend bzw. im Wesentlichen Gascluster, die Gascluster von Sauerstoffmolekülen und/oder von sauerstoffhaltigen Molekülen sind. Der Anteil derartiger Gascluster beträgt vorteilhafterweise größer gleich 40%, vorteilhafterweise bis zu 90% Cluster, die Sauerstoffmoleküle und/oder sauerstoffhaltige Moleküle aufweisen oder vollständig daraus bestehen.

Es ist möglich, denselben Strahl auch als Analysestrahl zu verwenden oder beispielsweise für den Analysestrahl andere Primärionen zu verwenden wie beispielsweise Bismut oder dergleichen.

Zur Herstellung von Gasclustern aus Sauerstoffmolekülen und/oder sauerstoffhaltigen Molekülen kann besonders vorteilhaft eine sogenannte Gasclusterionenquelle (GCIS) eingesetzt werden. Bei dieser wird ein O₂-Moleküle enthaltendes oder daraus bestehendes Gas/Gasgemisch mittels einer Düse mit einem Druck von mehreren Bar in eine Vakuumkammer expandiert. Hierbei bilden sich Gascluster von Sauerstoffmolekülen und/oder sauerstoffhaltigen Molekülen.

Die so gebildeten Gascluster können mittels eines Elektronenstrahles oder anderweitig ionisiert und dann anschließend beschleunigt werden. Sie dienen dann erfindungsgemäß zum Sputtern der Oberfläche der Probe und/oder auch zusätzlich zur Analyse der Probenoberfläche.

Die experimentellen Untersuchungen zur Elektromigration an Isolatoren haben gezeigt, dass sich für die Tiefenprofilierung an Isolatoren besonders Sauerstoff-Gasclusterionen mit Energien von einigen keV bis zu einigen 10 keV eignen. Diese Sauerstoff-Gascluster werden durch die Expansion eines O2 Gases oder eines Gasgemisches aus einer Düse bei Drücken von mehreren bar in eine Vakuumkammer erzeugt. Nach der Ionisation dieser Gascluster z.B. mittels eines Elektronenstrahls können diese beschleunigt werden und als lonenquelle zum Sputtern oder zur Analyse in der SIMS eingesetzt werden. Die lonenstrahlen enthalten Gascluster mit einer breiten Größenverteilung von einigen 100 bis zu einigen 1000 Molekülen. Der Schwerpunkt der Größenverteilung liegt typischerweise bei 500 bis 2000 Molekülen pro Ion.

Bei Energien von typisch 3 keV bis 50 keV, vorteilhafterweise 10 bis 20 keV lassen sich für den Abtrag anorganischer Proben ausreichend hohe Sputterausbeuten erzielen. Der Beschuss der Oberfläche mit diesen Gasclusterionen führt zu einer Oxidation der Probenoberfläche. Diese Oxidation begünstigt die Emission positiver Sekundärionen und erlaubt dadurch das Erreichen besonders niedriger Nachweisgrenzen. Es konnte gezeigt werden, dass unter diesen Sputterbedingungen die Elektromigration vollständig verhindert werden kann. So lässt sich durch den Einsatz von Sauerstoff-Gasclusterionen eine Tiefenprofilierung an Isolatoren ohne eine Verfälschung der Tiefenverteilung durch Elektromigration durchführen.

Zusammenfassend lässt sich feststellen, dass erfindungsgemäß der Abtrag der Probenoberfläche für die Tiefenprofilierung mittels eines lonenstrahls erfolgt, der im Wesentlichen Gascluster von Sauerstoffmolekülen und/oder sauerstoffhaltigen Molekülen enthält. Hierdurch wird eine Tiefenprofilierung auch von Isolatoren oder isolierendes Material enthaltenden Proben auf Alkalimetalle möglich, bei der zum Einen eine niedrige Nachweisgrenze möglich ist und andererseits Verfälschungen der Tiefenverteilung vermieden werden.

Im Folgenden werden Beispiele erfindungsgemäßer Verfahren und Massenspektrometer gegeben.

Es zeigen
Figur 1 eine Messung der Na⁺ Sekundärionenintensität als Funktion der Tiefe mittels ToF-SIMS an einer ca. 1 µm dicken SiO₂-Schicht auf Siliziumsubstrat bei einem Abtrag mit O₂, Cs und O₂-Gasclustern;
Figur 2 eine Messung der Na Konzentration als Funktion der Tiefe mittels ToF-SIMS an einer ca. 1 µm dicken SiO₂-Schicht auf Siliziumsubstrat bei einem Abtrag mit O₂, Cs und O₂-Gasclustern.
Figur 3 die Clustergrößenverteilung in einem Sauerstoff-Gasclusterionenstrahl
Figur 4 eine Messung der Na⁺ Sekundärionenintensität als Funktion der Tiefe mittels ToF-SIMS an einer ca. 1 µm dicken SiO₂-Schicht auf Siliziumsubstrat für Sauerstoff- und Argon-Gasclusterabtrag
Figur 5 Messungen des Na Konzentrationsprofils für unterschiedlich behandelte SiO₂ Proben

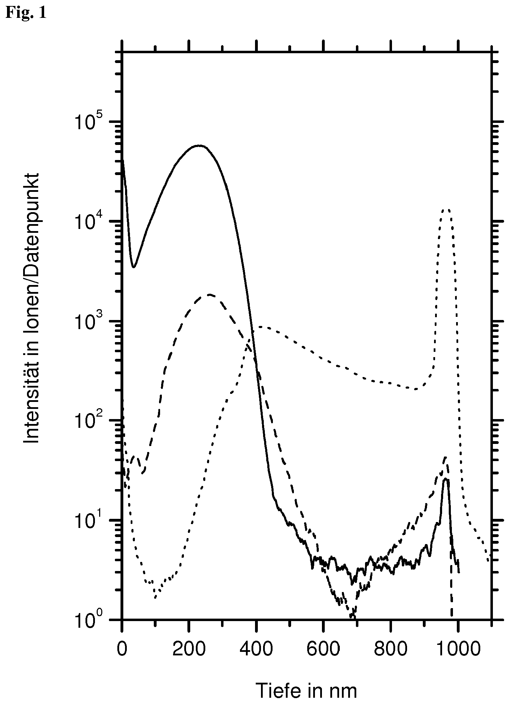

Figur 1 zeigt ein Tiefenprofil aufgenommen mit einem ToF-SIMS-Gerät. Dargestellt ist die Na⁺ Sekundärionenintensität als Funktion der abgetragenen Tiefe. Es handelt sich um eine logarithmische Intensitätsskala, bei der die Zahl der registrierten Sekundärionen pro Datenpunkt angegeben ist. Als Probe wurde eine ca. 1 µm dicke SiO₂-Schicht verwendet, die auf einem Siliziumsubstrat aufgebracht ist. In diese 1 µm dicke SiO₂-Schicht wurde zuvor Natrium bei einer Energie von 120 keV mit einer Flächendosis von 5·10¹⁴ Ionen/cm² implantiert. Die Tiefenverteilung eines derartigen Implantationsprofils ist grundsätzlich bekannt. Die vorliegende Messung dient der Demonstration der hervorragenden Eigenschaften von Sauerstoff-Gasclusterionen als Sputterionen gegenüber einer herkömmlichen Tiefenprofilierung mittels Sauerstoffionen O₂⁺ oder Cäsiumionen Cs⁺.

In einer ersten Messung wurde die Probe in einem ToF-SIMS-Massenspektrometer "ToF.SIMS 5" der ION-TOF GmbH mit einem Zweistrahlverfahren unter Einsatz von Sauerstoffionen O₂⁺ analysiert. Als gepulster Analysestrahl diente eine Bismut-Flüssigmetallionenquelle mit der Primärionenspezies Bi₁⁺, einer Energie von 30 keV und einer Analysefläche von 100 x 100 µm². Der Analysestrom betrug 4,6 pA bei einer Pulsfrequenz von 10 kHz. Die Messzeit pro Datenpunkt betrug 1,6 s. Der Abtrag erfolgte auf einer Fläche von 300 x 300 µm² mit einem O₂⁺ lonenstrahl bei einer Energie von 2 keV und einem lonenstrom von 255 nA. Wie im Stand der Technik üblich wurde zur Kompensation der Oberflächenaufladung durch den Sauerstoffionenstrahl eine niederenergetische Elektronenquelle mit einer Elektronenenergie von 20 eV eingesetzt. Die zugehörige Messung ist in Figur 1 als gepunktete Kurve eingezeichnet.

Wie zu erwarten ist das gemessene Tiefenprofil (gepunktete Kurve) extrem durch Elektromigration gestört. Kurz nach Beginn des Tiefenprofils fällt die Natriumintensität auf extrem niedrige Werte. Erst nach einiger Zeit der Tiefenprofilierung, d.h. scheinbar bei größerer Tiefe, wächst die Intensität dann wieder etwas an. An der Grenzschicht zwischen der SiO₂-Schicht und dem Siliziumsubstrat wächst dann das Signal extrem stark an und fällt dann im Silizium schnell wieder auf sehr niedrige Werte. Es ergibt sich also ein für Elektromigration typischer Signalverlauf, da die Natriumatome auf die Oberflächenaufladung reagieren und sich von der Oberfläche wegbewegen. Erst mit Erreichen der Grenzschicht wächst die elektrische Leitfähigkeit der Probe wieder an und die Oberflächenaufladung und damit auch die Elektromigration verschwindet. Das Natriumsignal wächst damit wieder stark an und es kommt zu einer Überhöhung der Natriumsignale aufgrund der Ansammlung migrierter Natriumionen in dieser Zone der Probe. Die Tiefenverteilung wurde also durch diese Messung sehr stark verfälscht.

Bei einer zweiten Messung, die mit einer gestrichelten Kurve in Figur 1 eingezeichnet ist, wurde bei identischen Analysebedingungen für den Abtrag der Probe zwischen den einzelnen Analysen ein Cäsium-Ionenstrahl verwendet. Die Energie des lonenstrahl betrug 2 keV bei einem Strahlstrom von 145 nA.

Wie zu erwarten wird die Elektromigration deutlich reduziert. Der Verlauf der Natrium-Intensität entspricht in etwa der erwarteten Tiefenverteilung, die an Isolatoren wie SiO₂ mit implantierten Natriumionen auftritt. Eine leichte Elektromigration findet dennoch statt und führt zu einer geringen Überhöhung des Signals an der Grenzschicht zum Siliziumsubstrat. Gravierender Nachteil dieser Methode ist jedoch die geringe Empfindlichkeit der Messung. Durch den Eintrag von Cäsium werden die positiven Sekundärionenausbeuten, die für Natrium wesentlich sind, deutlich reduziert. Im Maximum der Verteilung liegt die Intensität unterhalb von 2000 Ionen/Datenpunkt.

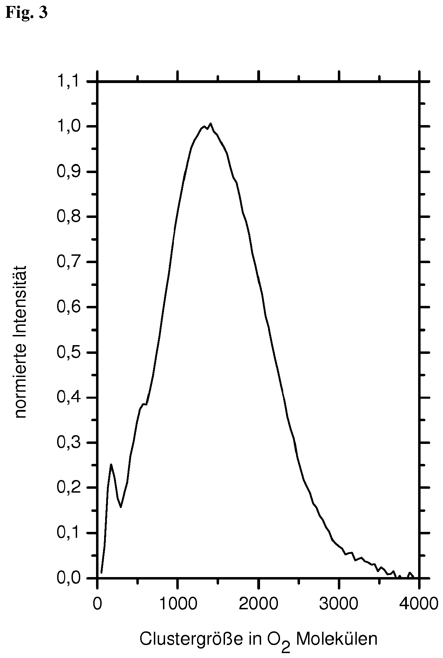

Die durchgezeichnete Linie in Figur 1 wurde mit einem erfindungsgemäßen Verfahren und einem erfindungsgemäß eingerichteten Massenspektrometer gemessen. Für den Abtrag Oberflächenschichten wurden zur Tiefenprofilierung bei den gleichen Analyseparametern große Sauerstoffgascluster mit im Wesentlichen 1400 Molekülen/Ion und einer Energie von 20 keV eingesetzt. Die Sauerstoffgascluster wurden durch eine Düse mit eine Einlassdruck von etwa 35 bar erzeugt. Der sich im Vakuum ausbreitende Gasclusterstrahl wurde mit einem Elektronenstrahl ionisiert und anschließend auf 20 keV Strahlenergie beschleunigt. Die typische Größenverteilung der Sauerstoff-Gasclusterionen ist in Fig. 3 dargestellt. Die Größenverteilung ist sehr breit und beginnt bei ca. 100 O₂ Molekülen und reicht bis zu ca. 3800 O₂ Molekülen. Das Maximum liegt bei ca. 1400 O₂ Molekülen pro Clusterion. Für den Abtrag wurde der Gasclusterstrahl über eine Fläche von 300 x 300 µm² gerastert bei einem Strahlstrom von 4,9 nA.

Der durchgezogen dargestellte Signalverlauf entspricht genau dem zu erwartenden und bekannten Implantationsprofil. Insbesondere am Verlauf der Kurve an der Grenzschicht zwischen der SiO₂-Isolatorschicht und dem Siliziumsubstrat bei einer Tiefe von 1.000 nm zeigt sich die bei diesem Messverfahren auftretende extrem geringe Elektromigration. Die Intensität an dieser Grenzschicht liegt um etwa drei Größenordnungen unter der höchsten Intensität im Tiefenprofil.

Als Wirkmechanismus ist anzunehmen, dass durch den Einsatz der Sauerstoff-Gascluster als Sputterionen die Oberfläche der Probe sehr gut oxidiert wird, was zu einer deutlich erhöhten positiven Sekundärionenausbeute für Natrium bei Desorption durch den Bi-Analysestrahl führt. Daraus resultieren folglich sehr niedrige Nachweisgrenzen für Natrium in dem isolierenden Material. Die minimale Konzentration, die nachgewiesen werden kann, liegt um mehr als vier Größenordnungen unter der Peak-Konzentration des Implantationsprofils. Die spezielle Wechselwirkung zwischen Clusterprojektil und Oberfläche in Verbindung mit einer höheren Sputterausbeute führen zu einer nahezu vollständigen Eliminierung der Elektromigration von Alkalimetallen in Isolatoren.

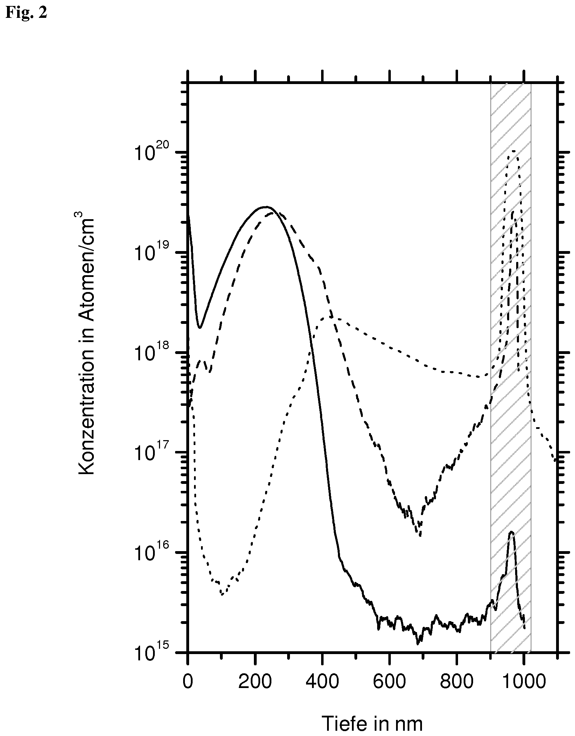

Figur 2 zeigt die Messergebnisse von Figur 1 mit den drei unterschiedlichen Sputterionenstrahlen nach einer Kalibration auf die Implantationsdosis auf einer logarithmischen Konzentrationsskala in Atome/cm³. Während die Peakkonzentration bei der Messung mit Sauerstoff-Gasclustern zu 3·10¹⁹ Atomen/cm³ bestimmt wird (durchgezogener Signalverlauf), führt die Elektromigration bei dem O₂-Sputterstrahl (gepunkteter Signalverlauf) zu völlig falschen Ergebnissen. Im Maximum des Implantationsprofils wird eine um mehr als 2 Größenordnungen reduzierte Konzentration gemessen und an der Grenzschicht zum Siliziumsubstrat steigt die Konzentration auf ca. 10²⁰ Atome/cm³ an. Der Konzentrationsverlauf unter Cäsium Sputterabtrag (gestrichelter Signalverlauf) zeigt eine nur leicht niedrigere Peakkonzentration im Vergleich zu den Sauerstoff-Gasclusterionen. Allerdings liegt infolge der Elektromigration die Konzentration an der Grenzschicht noch oberhalb von 2·10¹⁹ Atomen/cm³. Die Reduzierung der lonenausbeute führt zu einer schlechteren Nachweisgrenze von etwa 2·10¹⁶ Atomen/cm³, während bei O₂-Gasclusterionen Nachweisgrenzen unterhalb von 2·10¹⁵ Atomen/cm³ erreicht werden.

Als Maß für die Stärke der Elektromigration kann der Anteil der Na-Dosis in der Grenzschicht SiO₂/Si bestimmt werden. Der Anteil der Dosis im schraffierten Bereich in Figur 2 wurde für alle drei Abtragbedingungen bestimmt:

| | |
|---|---|
| O₂ Sputterionenstrahl (gepunktete Kurve) | 94 % |
| Cs Sputterionenstrahl (gestrichelte Kurve) | 9,2 % |
| O₂ Gasclusterionenstrahl (durchgezogene Kurve) | 0,01 % |

Hieraus wird sehr deutlich, dass die Elektromigration unter Sauerstoff-Gasclusterabtrag praktisch vernachlässigbar ist und der Konzentrationverlauf quantitativ bestimmt werden kann.

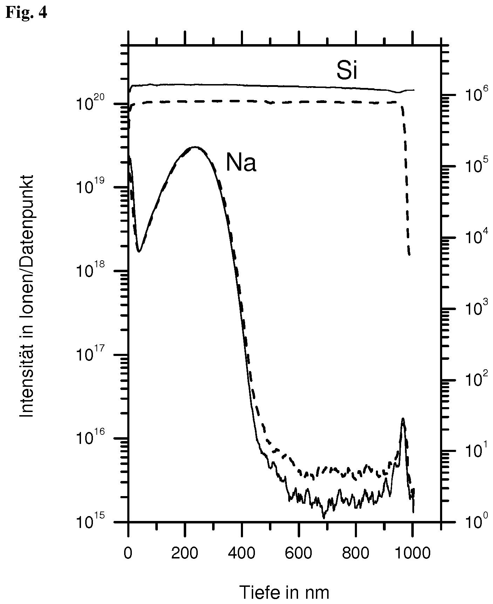

In Figur 4 wird das Tiefenprofil bei Abtrag durch Sauerstoff-Gascluster (siehe Figur 1) mit dem Abtrag durch eine Argon-Gasclusterstrahl verglichen. Die Analyse- und Sputterparameter sind für beide Messungen gleich. Die Figur 4 zeigt den Signalverlauf für das Silizium Matrixsignal Si⁺ sowie für Na⁺ für die beiden verschiedenen Gasclusterstrahlen. Der Sauerstoff-Gasclusterstrahl erhält die vollständige Oxidation des SiO₂ während des Abtrags und führt auch zu einer vollständigen Oxidation des Siliziumsubstrats. Dies zeigt sich am Si⁺ Verlauf unter Sauerstoff-Gasclusterbeschuss (durchgezogene Kurve). Unter Argon-Gasclusterbeschuss (gestrichelte Kurve) wird die Oxidation etwas reduziert und die Signalintensität des Si⁺ wird etwas erniedrigt. Im Siliziumsubstrat bricht dann das Signal stark ein, da durch das Fehlen von Sauerstoff die positive lonenausbeute um mehrere Größenordnungen reduziert wird. Der Na⁺ Signalverlauf ist unter beiden Beschussbedingungen sehr ähnlich. Die Nachweisgrenzen sind unter Sauerstoff-Gasclusterabtrag etwa um einen Faktor 2,5 niedriger. Dieses Beispiel zeigt, dass die Alkalikonzentrationen im SiO₂ mit beiden Arten von Gasclusterstrahlen korrekt bestimmt werden können. Der weitere Verlauf der Konzentration im Siliziumsubstrat kann allerdings nur mit dem Sauerstoff-Gasclusterstrahl gemessen werden, da dieser die vollständige Oxidation und damit eine gleichbleibende Ionisierung sicherstellt.

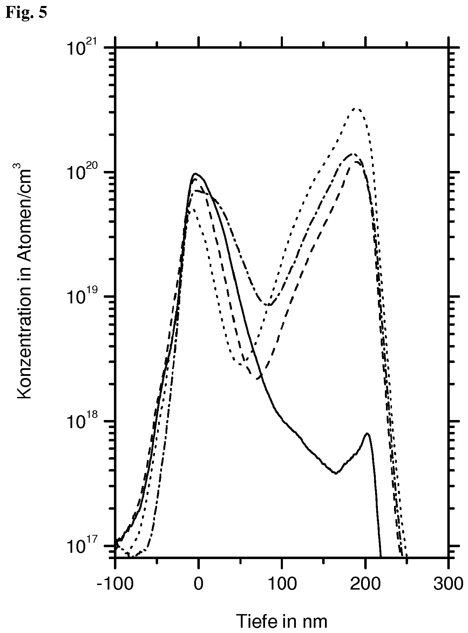

Figur 5 zeigt weitere Tiefenprofile, die an unterschiedlichen SiO₂-Schichten gemessen wurden. In der Mikroelektronik spielen die mobilen Ionen wie z.B. Natrium und Kalium eine sehr wichtige Rolle, da sie als Verunreinigungen in Bauelementen durch die angelegten Spannungen in den dielektrischen Schichten schnell diffundieren und hierdurch die Eigenschaften eines Bauelementes erheblich beinträchtigen können. Daher wird zur Optimierung der Zuverlässigkeit und Lebensdauer eines Bauelementes ein empfindliches und quantitatives Nachweisverfahren für Alkalimetalle benötigt. Die SiO₂-Isolatorschichten in den eingesetzten Testproben weisen eine Dicke von 200 nm auf und sind jeweils auf einem Silizium-Substrat aufgebracht. Bei diesen Proben wurde Natrium gezielt durch Elektromigration in die SiO₂-Isolatorschicht eingebracht. Die Proben unterscheiden sich durch die Länge und die Richtung des Migrationsprozesses. Danach wurden die Proben mit Gold beschichtet. Die Dicke der Beschichtung beträgt ca. 40 nm. Die in Figur 5 dargestellten Kurven zeigen die Natrium-Verteilung in den einzelnen Proben. Die Messungen erfolgten im Zweistrahlverfahren. Als gepulster Analysestrahl diente eine Bismut-Flüssigmetallionenquelle mit der Primärionenspezies Bi₁⁺, einer Energie von 30 keV und einer Analysefläche von 100 x 100 µm². Für den Abtrag der Oberflächenschichten wurden zur Tiefenprofilierung erfindungsgemäß große Sauerstoffgascluster mit im Wesentlichen 1400 Molekülen/Ion und einer Energie von 20 keV eingesetzt. Der Abtrag erfolgte auf einer Fläche von 300 x 300 µm².

Die Strich/Punkt Kurve zeigt die Verteilung der Natriumionen nachdem die Einbringung von Natrium in die SiO₂-Schicht etwa zur Hälfte abgeschlossen wurde. Die gepunktete Kurve stellt die Natriumverteilung nach vollständiger Beendigung der Migration dar. Die gestrichelte Kurve zeigt die Verteilung nach der Hälfte der Migration in umgekehrter Richtung. Die durchgezogene Kurve zeigt die Natriumverteilung nachdem das Natrium wieder aus der Schicht entfernt wurde. Die Ergebnisse zeigen, dass das erfindungsgemäße Verfahren eine quantitative Analyse dieser Proben ermöglicht.

## Patentansprüche

1. Sekundärionenmassenspektroskopisches Verfahren (SIMS) zur tiefenprofilierenden Untersuchung von Alkalimetallen in einem isolierenden, zu ≥ 10^{16 ∗} 1/cm³ Alkalimetalle enthaltenden Material, wobei die Probe mit einem lonenstrahl als Analysestrahl zur Desorption von Sekundärionen aus den oberflächennahen Schichten der Probe bestrahlt wird und die Oberfläche der Probe mit demselben oder einem weiteren lonenstrahl abgetragen wird
**dadurch gekennzeichnet,**
**dass** der zum Abtrag der Probenoberfläche eingesetzte lonenstrahl im Wesentlichen Gascluster von Sauerstoffmolekülen und/oder sauerstoffhaltigen Molekülen enthält oder daraus besteht.

2. Verfahren nach dem vorhergehenden Anspruch, **dadurch gekennzeichnet, dass** der zum Abtrag der Probenoberfläche eingesetzte lonenstrahl zu ≥ 40%, vorteilhafterweise zu ≥ 60%, vorteilhafterweise zu ≥ 80%, vorteilhafterweise zu ≥ 90% Cluster von Sauerstoffmolekülen und/oder sauerstoffhaltigen Molekülen enthält oder daraus besteht.

3. Verfahren nach einem der vorhergehenden Ansprüche, **dadurch gekennzeichnet, dass** die Gascluster zu ≥ 80% Gascluster mit 100 bis 5000 Sauerstoffmolekülen pro Clustermolekül, vorteilhafterweise mit 500 bis 2000 Sauerstoffmolekülen und/oder sauerstoffhaltigen Molekülen pro Clustermolekül sind.

4. Verfahren nach einem der vorhergehenden Ansprüche, **dadurch gekennzeichnet, dass** die Gascluster des zum Abtrag der Probenoberfläche eingesetzten lonenstrahls mit einer Energie zwischen 3keV und 50 keV, vorteilhafterweise zwischen 5 keV und 25 keV, vorteilhafterweise zwischen 10 keV und 20 keV, jeweils einschließlich oder ausschließlich der Bereichsgrenzen, auf die Oberfläche der Probe auftreffen.

5. Verfahren nach einem der vorhergehenden Ansprüche, **dadurch gekennzeichnet, dass** als massenspektroskopisches Verfahren ein TOF-SIMS-Verfahren eingesetzt wird.

6. System umfassend ein Massenspektrometer, eingerichtet zum Durchführen eines Verfahrens nach einem der vorhergehenden Ansprüche, sowie eine Probe enthaltend ein isolierendes, zu ≥ 10^{16 ∗} 1/cm³ Alkalimetalle enthaltendes Material , **dadurch gekennzeichnet, dass**
das Massenspektrometer eine
Sauerstoff-Gasclusterquelle als lonenquelle für den Abtrag der Oberfläche der Probe aufweist.

7. Verwendung eines Verfahrens oder eines Massenspektrometers nach einem der vorhergehenden Ansprüche zur Untersuchung des Tiefenprofils von Alkalimetallen in einem isolierenden, zu ≥ 10^{16 ∗} 1/cm³ Alkalimetalle enthaltenden Material, insbesondere eines isolierenden, zu ≥ 1 ppm und/oder zu ≥ 10^{19 ∗} 1/cm³ Alkalimetalle enthaltenden Materials, insbesondere eines derartigen SiO₂ enthaltenden Materials oder eines derartigen Glases.

## Claims

1. Secondary ion mass spectroscopic method (SIMS) for depth-profiling analysis of alkali metals in an insulating material comprising ≥ 10^{16 ∗} 1/cm³ alkali metals, the sample being irradiated by an ion beam as analysis beam for desorption of secondary ions from the near-surface layers of the sample and the surface of the sample being removed with the same or a further ion beam, ***characterised in that***
the ion beam used for removal of the sample surface essentially comprises gas clusters of oxygen molecules and/or oxygen-containing molecules or consists thereof.

2. Method according to the preceding claim, **characterised in that** the ion beam used for removal of the sample surface comprises ≥ 40%, advantageously ≥ 60%, advantageously ≥ 80%, advantageously ≥ 90%, clusters of oxygen molecules and/or oxygen-containing molecules or consists thereof.

3. Method according to one of the preceding claims, **characterised in that** the gas clusters are ≥ 80% gas clusters with 100 to 5,000 oxygen molecules per cluster molecule, advantageously with 500 to 2,000 oxygen molecules and/or oxygen-containing molecules per cluster molecule.

4. Method according to one of the preceding claims, **characterised in that** the gas clusters of the ion beam used for removal of the sample surface impinge, with an energy between 3 keV and 50 keV, advantageously between 5 keV and 25 keV, advantageously between 10 keV and 20 keV, respectively including or excluding the range limits, on the surface of the sample.

5. Method according to one of the preceding claims, **characterised in that** a ToF-SIMS method is used as mass spectroscopic method.

6. System comprising
a mass spectrometer, configured for implementing a method according to one of the preceding claims, and
a sample comprising an insulating material comprising ≥ 10¹⁶ * 1/cm³ alkali metals
**characterized in that**
the mass spectrometer comprises an oxygen gas-cluster source as ion source for removal of the surface of the sample.

7. Use of a method or of a mass spectrometer according to one of the preceding claims for examining the depth profile of alkali metals in an insulating material comprising ≥ 10¹⁶ * 1/cm³ alkali metals, in particular an insulating material comprising ≥ 1 ppm and/or ≥ 10¹⁹ * 1/cm³ alkali metals, in particular such a material comprising SiO₂ or such a glass.

## Revendications

1. Procédé de spectroscopie de masse des ions secondaires (SIMS) pour l'analyse de profils en profondeur de métaux alcalins dans un matériau isolant contenant des métaux alcalins à ≥ 10^{16 ∗} 1/cm³, dans lequel l'échantillon est irradié avec un faisceau d'ions comme faisceau d'analyse pour la désorption d'ions secondaires des couches proches de la surface de l'échantillon et la surface de l'échantillon est enlevée avec le même ou un autre faisceau d'ions,
**caractérisé en ce que**
le faisceau d'ions utilisé pour l'ablation de la surface de l'échantillon contient essentiellement des agrégats gazeux de molécules d'oxygène et/ou de molécules contenant de l'oxygène ou en est constitué.

2. Procédé selon la revendication précédente, **caractérisé en ce que** le faisceau d'ions utilisé pour l'ablation de la surface de l'échantillon contient ≥ 40 %, avantageusement ≥ 60 %, avantageusement ≥ 80 %, avantageusement ≥ 90 % d'agrégats de molécules d'oxygène et/ou de molécules contenant de l'oxygène ou en est constitué.

3. Procédé selon l'une quelconque des revendications précédentes, **caractérisé en ce que** les agrégats gazeux sont à ≥ 80 % des agrégats gazeux avec 100 à 5 000 molécules d'oxygène par molécule d'agrégat, avantageusement avec 500 à 2 000 molécules d'oxygène et/ou molécules contenant de l'oxygène par molécule d'agrégat.

4. Procédé selon l'une quelconque des revendications précédentes, **caractérisé en ce que** les agrégats gazeux du faisceau d'ions utilisé pour l'ablation de la surface de l'échantillon frappent la surface de l'échantillon avec une énergie comprise entre 3 keV et 50 keV, avantageusement entre 5 keV et 25 keV, avantageusement entre 10 keV et 20 keV, à chaque fois y compris ou exclusivement les limites de zone.

5. Procédé selon l'une quelconque des revendications précédentes, **caractérisé en ce qu'**un procédé TOF-SIMS est utilisé comme procédé de spectroscopie de masse.

6. Système comprenant un spectromètre de masse, conçu pour mettre en œuvre un procédé selon l'une quelconque des revendications précédentes, ainsi qu'un échantillon contenant un matériau isolant contenant des métaux alcalins à ≥ 10^{16 ∗} 1/cm³, **caractérisé en ce que** le spectromètre de masse présente une source d'agrégats d'oxygène gazeux comme source d'ions pour l'ablation de la surface de l'échantillon.

7. Utilisation d'un procédé ou d'un spectromètre de masse selon l'une quelconque des revendications précédentes pour l'étude du profil en profondeur de métaux alcalins dans un matériau isolant contenant des métaux alcalins à ≥ 10^{16∗} 1/cm³, notamment un matériau isolant contenant des métaux alcalins à ≥ 1 ppm et/ou à ≥ 10^{19 ∗} 1/cm³, notamment un matériau de ce type contenant du SiO₂ ou un verre de ce type.
